# EUROPEAN PATENT SPECIFICATION

(11) **EP 4 175 024 B1**
(45) Date of publication and mention of the grant of the patent: **01.07.2026**
(21) Application number: 21903777.7
(22) Date of filing: 06.12.2021
(51) Int. Cl.: H01M 10/6569, H01M 10/6568, H01M 10/647, H01M 10/613, H01M 50/211, H01M 10/6556

(54) **BATTERY PACK, AND DEVICE INCLUDING SAME**
BATTERIEPACK UND VORRICHTUNG DAMIT
BLOC-BATTERIE ET DISPOSITIF LE COMPRENANT

(30) Priority: 08.12.2020 KR 20200170440
(43) Date of publication of application: 03.05.2023
(73) Proprietor: LG Energy Solution, Ltd., Seoul 07335 (KR)
(72) Inventor: JEONG, Jee Hoon, Daejeon 34122 (KR)
(74) Representative: Goddar, Heinz J.
(86) International application number: PCT/KR2021/018365
(87) International publication number: WO 2022/124731

(56) References cited:
- EP-A1- 2 950 379
- WO-A1-2018/163180
- DE-A1- 102009 000 066
- JP-A- 2014 026 825
- JP-B2- 6 604 442
- KR-A- 20150 117 521
- KR-A- 20160 083 775
- KR-A- 20180 106 688
- US-A- 6 106 972
- US-B2- 8 790 809

## Description

### [Technical Field]

The present invention relates to a battery pack and a device including the same, and it relates to a battery pack that can prevent fire and transmit heat efficiently, and a device including the same.

### [Background Art]

In modern society, as the use of portable devices, such as mobile phones, notebook computers, camcorders, and digital cameras, has become commonplace, the development of technologies related to the mobile devices has become active. Further, a rechargeable secondary battery is a measure to solve the air pollution of existing gasoline vehicles that use fossil fuels, and is used as a power source of an Electric Vehicle (EV), a Hybrid Electric Vehicle (HEV), a Plug-in Hybrid Electric Vehicle (P-HEV), and the like, so that the need for development of the secondary battery is also increasing.

In the case of a rechargeable battery used in small devices, 2 to 3 battery cells are disposed, but in the case of a rechargeable battery used in a medium or large device such as an automobile, a battery module in which a plurality of battery cells are electrically connected is used.

In the case of a battery module used in such a medium-large device, a plurality of battery cells are electrically connected in series to provide a greater capacity than a specific value required by the device, and in this case, the stability of the rechargeable battery itself varies depending on a method of connecting a plurality of battery cells and a method of fixing them.

In particular, in a rechargeable battery with increased capacity as described above, a method of cooling the battery is important in order to prevent a problem due to overheating of the battery. It is necessary to efficiently dissipate the heat inside the battery, and for dissipating the heat of the rechargeable battery, there is a method of applying a thermal interface material (TIM) to the surface that is coupled to the rechargeable battery. The thermal interface material (TIM) is also called a thermal interface material, and in a heat transfer path, a contact area of the heat transfer surface is adjusted by filling the material between each surface, and accordingly, the thermal resistance can be controlled by controlling the path of heat transfer,

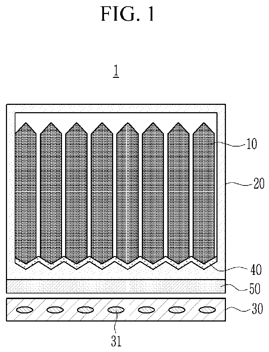

FIG. 1 is a cross-sectional view of a part of a conventional battery pack.

Referring to FIG. 1, a conventional battery pack 1 includes a battery module formed by accommodating a battery cell formed by laminating a plurality of battery cells 10 in a module frame 20, and a battery pack frame 30 supporting the battery module. In this case, a thermal conductive adhesive layer 40 is formed between the battery cell 10 and the module frame 20 for heat dissipation, and a thermal interface material layer 50 is formed between the module frame 20 and the battery pack frame 30. In addition, in the battery pack frame 30, a flow path 31 through which a refrigerant flows may be formed to improve cooling performance.

In such a structure, the heat generated in the battery cell 10 is transferred to the thermal interface material layer 50 through the aluminum module frame 20 through the lower thermal conductive adhesive layer 40 in a lower portion, and then is discharged through the battery pack frame 30 to the outside, thereby cooling the battery cell 10.

However, in this case, the path through which heat is discharged to the outside is complicated, and additional heat transfer materials that can transfer heat between the cell, the module frame, and the battery pack frame are required, and thus there are problems that rapid cooling is difficult, the weight of the entire battery pack increases, and the structure becomes complicated due to the increase in configuration.

US 6 106 972 A relates to a cooling apparatus communicating through a communicating pipe with an inside space of an airtight casing in which a plurality of battery cells are hermetically held. The cooling apparatus and the inside space of the airtight casing are filled with high boiling point coolant. The coolant absorbs heat developed by the plurality of battery cells in the airtight casing so that it evaporates. The evaporated (gaseous) coolant rises toward the cooling apparatus and is condensed in the cooling apparatus. Then the condensed (liquid) coolant returns to around the battery cells by its self-weight. Accordingly, the battery cells are uniformly and efficiently cooled not to have variation in temperature therein.

DE 10 2009 000066 A1 describes a method that involves executing an evaporating cooling of battery cells of a battery system with a heat transfer medium fully surrounding all battery cells to be tempered which are introduced in a housing. The battery cells of the battery system are heated.

### [Disclosure]

### [Technical Problem]

Embodiments of the present invention are proposed to solve the above problems, and a battery pack that can prevent fire by efficiently transferring heat generated inside the secondary battery and cooling it quickly, and reduce material cost and weight by excluding unnecessary heat transfer structures can be provided.

### [Technical Solution]

The invention is defined in the appended claims. A battery pack according to the present invention includes: a battery pack frame including a plurality of accommodating portions; a plurality of battery cell laminates accommodated in a respective one of the plurality of accommodating portions; a coolant filled in the plurality of accommodating portions; an upper plate that covers the plurality of accommodating portions; and a heat exchanger that liquefies the coolant that is vaporized by communicating with the plurality of accommodating portions, wherein the coolant is a liquid with insulating characteristics, whereinthe plurality of battery cell laminates directly contacts the coolant, whereinthe coolant that is vaporized directly contacts the heat exchanger, whereinthe coolant that is liquefied is returned to the plurality of accommodating portions, wherein the plurality of accommodating portions are separated by at least one partitioning wall, and a separation space exists between the at least one partitioning wall and the upper plate, and wherein the heat exchanger communicates with the separation space.

The heat exchanger may communicate with the plurality of accommodating portions through a passage formed by an upper plate covering the plurality of accommodating portions.

The heat exchanger may be a cooling plate formed between an upper plate covering the plurality of accommodating portions and the plurality of accommodating portions.

A device according to another embodiment of the present invention includes the above-described battery pack.

### [Advantageous Effects]

According to the embodiments of the present invention, it is possible to cool the battery cell by directly accommodating coolant inside the battery pack, and rapid cooling is possible, and the material cost and weight of the entire battery pack can be reduced by eliminating unnecessary heat transfer structures.

### [Description of the Drawings]

FIG. 1 is a cross-sectional view of a part of a conventional battery pack.
FIG. 2 is an exploded view of a battery pack according to an embodiment of the present invention.
FIG. 3 shows a cross-section of the battery pack of FIG. 2 in an assembled state.
FIG. 4 is a cross-sectional view of a battery pack according to another embodiment of the present invention.

### [Mode for Invention]

Hereinafter, with reference to the accompanying drawing, various embodiments of the present invention will be described in detail such that a person of an ordinary skill can easily practice it in the technical field to which the present invention belongs.

The drawings and description are to be regarded as illustrative in nature and not restrictive. Like reference numerals designate like elements throughout the specification.

In the drawings, size and thickness of each element are arbitrarily illustrated for convenience of description, and the present invention is not necessarily limited to as illustrated in the drawings. In the drawings, the thickness of layers, films, panels, regions, etc., are exaggerated for clarity. In addition, the drawing, for convenience of explanation, the thickness of some layers and regions is exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. Further, throughout the specification, the word "on" a target element will be understood to be positioned above or below the target element, and will not necessarily be understood to be positioned "at an upper side" based on an opposite to gravity direction.

In addition, unless explicitly described to the contrary, the word "comprise", and variations such as "comprises" or "comprising", will be understood to imply the inclusion of stated elements but not the exclusion of any other elements.

Further, throughout the specification, the phrase "on a plane" means viewing a target portion from the top, and the phrase "on a cross-section" means viewing a cross-section formed by vertically cutting a target portion from the side.

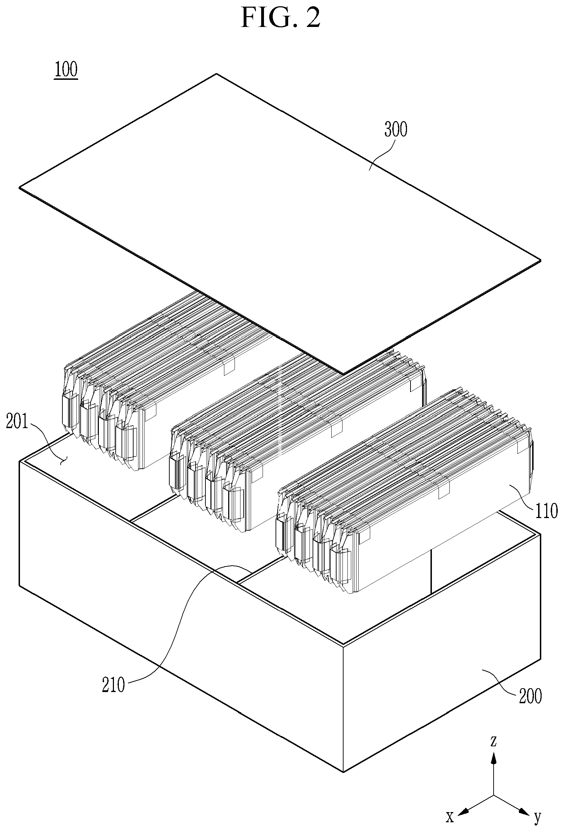

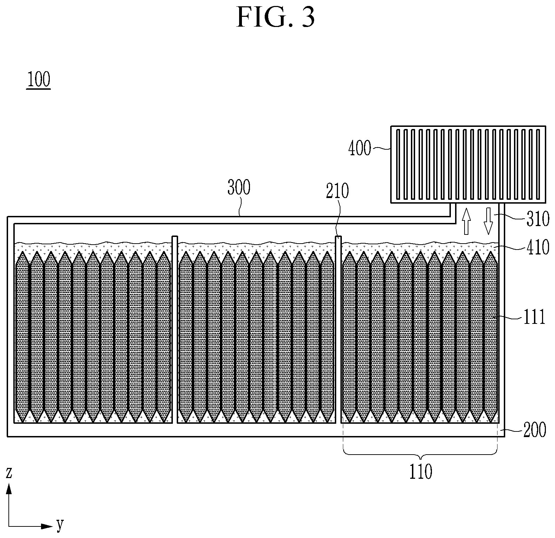

Hereinafter, referring to FIG. 2 and FIG. 3, a battery pack according to an embodiment of the present invention will be described.

FIG. 2 is an exploded view of a battery pack according to an embodiment of the present invention. FIG. 3 shows a cross-section of the battery pack of FIG. 2 in an assembled state. In particular, in FIG. 3, a configuration of a heat exchanger coupled to the battery pack of FIG. 2 is shown together.

As shown in FIG. 2, a battery pack 100 according to an embodiment of the present invention includes a battery pack frame 200 in which an accommodating portion 201 accommodating a single battery cell laminate 110 is formed in plural, a plurality of battery cell laminates 110 respectively accommodated in the accommodating portions 201, a coolant 410 filled in the accommodating portion, and a heat exchanger 400 that directly liquefies a vaporized coolant through communication with the plurality of accommodating portions.

The battery cell laminate 110 may be formed by stacking a plurality of battery cells 111 in one direction. In this case, each battery cell 111 may be a pouch-type battery cell, but is not limited thereto. In addition, although not shown, an additional member for electrical connection between the battery cell laminate 110 and the external configuration may be included, and a detailed description thereof will be omitted here.

The battery cell laminate 110 may be directly accommodated in the accommodating portion 201 formed in the battery pack frame 200 without a separate accommodating member such as a module case. In this case, each accommodating portion 201 may be separated and partitioned by a partitioning wall 210. In the accommodating portion 201, the coolant 410 is filled together with the battery cell laminate 110. The coolant 410 may be filled such that the battery cell laminate 110 is submerged as shown in the drawing. According to such a configuration, rapid cooling is possible because the entire battery cell laminate 110 is in contact with the coolant 410. In addition, as described later, when a temperature rises above a certain level, vaporization of the coolant 410 can be actively performed, and thus cooling efficiency can be further increased.

The coolant 410 is a component filled in the accommodating portion 201 and can be used without particular limitation as long as it has excellent cooling properties and insulating properties. For example, insulated cooling water or antifreeze that can maximize cooling efficiency due to high latent heat can be used. The coolant 410 is filled inside each of the accommodating portions 201 partitioned by the partitioning wall 210.

In this case, an upper portion of the partitioning wall 210 is formed so as to not contact an upper plate 300 forming an upper portion of the battery pack 100 such that a space between the accommodating portion 201 and the upper plate 300 is not partitioned by the accommodating portion 201 and may be disposed to form one space. Accordingly, when the coolant 410 included in each accommodating portion 201 is vaporized, it is liquefied again through one heat exchanger 400 to be accommodated in the accommodating portion 201.

The upper plate 300 covers the upper portion of the battery pack 100 and can be combined with the battery pack frame 200 by a method such as welding. In this case, as shown in FIG. 3, a part of the upper plate 300 is provided with a passage 310 communicating with the inside of the battery pack frame 200, and the passage 310 may be formed to be connected to the heat exchanger 400. That is, the plurality of accommodating portions 201 are connected to each other through a separation space under the upper plate 300, and the heat exchanger 400 communicates with the separation space through the passage 310 such that the plurality of accommodating portions 201 may be formed to be connected with one heat exchanger 400.

In the present invention, when heat is generated in the battery cell laminate 110 included in the accommodating portion 201, heat is transferred to the coolant 410 in direct contact with the battery cell laminate 110 to be cooled. In particular, conventionally, as described in FIG. 1, the heat generated in the battery cell 10 is transferred through the bottom surface of the module frame 20 through the thermal conductive adhesive layer 40 at the bottom, and transferred to the thermal interface material layer 50 and the battery pack frame 30 below it such that the heat transfer structure and path are complicated and the efficiency is insignificant. However, in the present invention, since the heat generated in the battery cell 111 is effectively transferred through the coolant 410, rapid and efficient cooling can be achieved. In addition, since separate heat transfer structures such as the thermal conductive adhesive, the module frame, and the thermal interface material layer can all be deleted, material cost reduction and weight reduction can be realized.

In addition, when the temperature of the battery cell laminate 110 rises rapidly, coolant 410 boils and vaporizes, and due to the heat of vaporization at this time, it is possible to suppress the rapid temperature rise of the battery cell 111. In addition, the coolant 410 not only suppresses the temperature rise of the battery cell laminate 110 through vaporization, but also simultaneously blocks oxygen supply to the battery cell 111, and thus even though the temperature rises rapidly in the battery cell 111, the risk of ignition and explosion can be prevented.

The vaporized coolant 410 moves to the heat exchanger 400 and is cooled in the heat exchanger 400 by contacting the heat exchanger 400. In this case, the heat exchanger 400 itself is in the form of a flow path containing a refrigerant inside, or may be formed of a cooling fin, and is not particularly limited as long as it can be liquefied in contact with vaporized coolant 410. The coolant 410 liquefied again by cooling in the heat exchanger 400 moves to the cell side, that is, the accommodating portion 201 again. With such a configuration, it is possible to automatically achieve circulation of the coolant 410 without a separate circulation device (e.g., a flow path in the battery pack or a circulation driving unit for moving the fluid again).

As described above, according to the present embodiment, the cost and weight can be reduced by eliminating the complex heat transfer structure, and the battery cell laminate can be cooled quickly and efficiently without the complex heat transfer structure. In addition, since the coolant 410 can circulate through liquefaction and vaporization of the coolant 410 without a separate circulation structure for circulation of the coolant 410, a simple cooling function can be realized.

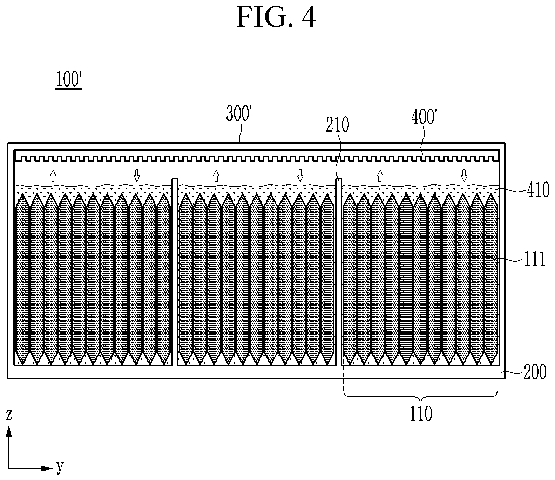

Next, another embodiment of the present invention will be described with reference to FIG. 4.

FIG. 4 is a cross-sectional view of a battery pack according to another embodiment of the present invention.

A battery pack 100' according to another embodiment is the same as the battery pack 100 of the above-described embodiment, except for a configuration of a heat exchanger, and thus the duplicated description will be omitted.

As shown in FIG. 4, a heat exchanger 400' in the present embodiment is formed in the form of a cooling plate disposed between an upper plate 300 and an accommodating portion 201. That is, by forming the heat exchanger 400' with a cooling plate having a plurality of cooling fins, it can be disposed and fixed to a lower part of the upper plate 300'. Alternatively, without being limited thereto, it is also possible to configure the upper plate 300' itself as a cooling plate.

Liquefaction of a vaporized coolant 410 can be quickly carried out over a wide area by disposing the heat exchanger 400' in the form of a cooling plate over the entire upper part of a plurality of accommodating portions 201, and accordingly, cooling efficiency of a battery cell laminate 110 can be improved and circulation efficiency of the coolant 410 can also be improved.

As described above, according to the present invention, the material cost of the battery pack and the overall weight of the battery pack can be reduced by enabling the coolant to transfer the heat generated in the battery cell laminate to the outside quickly and efficiently without a complicated heat transfer structure. In addition, the circulation of the coolant can be carried out by forming the vaporization and liquefaction of the coolant to be repeated in the battery pack without including a separate circulation structure for the circulation of the coolant used.

The battery pack can be applied to various devices. Such a device may be applied to transportation means such as an electric bicycle, electric vehicle, hybrid vehicle, etc., but the present invention is not limited thereto and is applicable to various devices that can use a battery module.

### <Description of symbols >

- 100:: battery pack
- 110:: battery cell laminate
- 111:: battery cell
- 200:: battery pack frame
- 201:: accommodating portion
- 210:: partitioning wall
- 300:: upper plate
- 310:: passage
- 400, 400':: heat exchanger
- 410:: coolant

## Claims

1. A battery pack (100) comprising:
a battery pack frame (200) including a plurality of accommodating portions (201);
a plurality of battery cell laminates (110) accommodated in a respective one of the plurality of accommodating portions (201);
a coolant (410) filled in the plurality of accommodating portions (201);
an upper plate (300) that covers the plurality of accommodating portions (201); and
a heat exchanger (400) that liquefies the coolant that is vaporized by communicating with the plurality of accommodating portions (201),
wherein the coolant (410) is a liquid with insulating characteristics,
wherein the plurality of battery cell laminates (110) directly contacts the coolant (410),
wherein the coolant (410) that is vaporized directly contacts the heat exchanger (400),
wherein the coolant (410) that is liquefied is returned to the plurality of accommodating portions (201),
wherein the plurality of accommodating portions (201) are separated by at least one partitioning wall (210), and a separation space exists between the at least one partitioning wall (210) and the upper plate (300), and
wherein the heat exchanger (400) communicates with the separation space.

2. The battery pack (100) of claim 1, wherein the heat exchanger (400) communicates with the plurality of accommodating portions (201) through a passage (310) formed by an upper plate (300) covering the plurality of accommodating portions (201).

3. The battery pack of claim 1, wherein the heat exchanger (400) is a cooling plate formed between an upper plate (300) covering the plurality of accommodating portions (201) and the plurality of accommodating portions (201).

4. A device comprising the battery pack of claim 1.

## Patentansprüche

1. Batteriepack (100), umfassend:
einen Batteriepackrahmen (200), der eine Vielzahl von Aufnahmeabschnitten (201) beinhaltet;
eine Vielzahl von Batteriezellenlaminaten (110), die in einem jeweiligen der Vielzahl von Aufnahmeabschnitten (201) aufgenommen sind;
ein Kühlmittel (410), das in die Vielzahl von Aufnahmeabschnitten (201) gefüllt ist;
eine obere Platte (300), die die Vielzahl von Aufnahmeabschnitten (201) bedeckt; und
einen Wärmetauscher (400), der das Kühlmittel verflüssigt, das durch Kommunizieren mit der Vielzahl von Aufnahmeabschnitten (201) verdampft wird,
wobei das Kühlmittel (410) eine Flüssigkeit mit isolierenden Eigenschaften ist,
wobei die Vielzahl von Batteriezellenlaminaten (110) das Kühlmittel (410) direkt berührt,
wobei das Kühlmittel (410), das verdampft wird, den Wärmetauscher (400) direkt berührt,
wobei das Kühlmittel (410), das verflüssigt wird, zu der Vielzahl von Aufnahmeabschnitten (201) zurückgeführt wird,
wobei die Vielzahl von Aufnahmeabschnitten (201) durch mindestens eine Trennwand (210) getrennt sind und ein Trennungsraum zwischen der mindestens einen Trennwand (210) und der oberen Platte (300) vorhanden ist, und
wobei der Wärmetauscher (400) mit dem Trennungsraum kommuniziert.

2. Batteriepack (100) nach Anspruch 1, wobei der Wärmetauscher (400) mit der Vielzahl von Aufnahmeabschnitten (201) durch einen Durchgang (310) kommuniziert, der durch eine obere Platte (300) gebildet ist, die die Vielzahl von Aufnahmeabschnitten (201) bedeckt.

3. Batteriepack nach Anspruch 1, wobei der Wärmetauscher (400) eine Kühlplatte ist, die zwischen einer oberen Platte (300), die die Vielzahl von Aufnahmeabschnitten (201) bedeckt, und der Vielzahl von Aufnahmeabschnitten (201) gebildet ist.

4. Vorrichtung, umfassend den Batteriepack nach Anspruch 1.

## Revendications

1. Bloc-batterie (100) comprenant :
un cadre de bloc-batterie (200) comprenant une pluralité de parties réceptrices (201) ;
une pluralité de stratifiés de cellule de batterie (110) placés dans une partie réceptrice respective parmi une pluralité de parties réceptrices (201) ;
un réfrigérant (410) introduit dans la pluralité de parties réceptrices (201) ;
une plaque supérieure (300) couvrant la pluralité de parties réceptrices (201) ; et
un échangeur de chaleur (400) liquéfiant le réfrigérant vaporisé par la communication avec la pluralité de parties réceptrices (201) ;
le réfrigérant (410) étant un liquide présentant des propriétés d'isolation,
la pluralité de stratifiés de cellule de batterie (110) étant en contact direct avec le réfrigérant (410),
le réfrigérant (410) vaporisé étant en contact direct avec l'échangeur de chaleur (400),
le réfrigérant (410) liquéfié étant renvoyé dans la pluralité de parties réceptrices (201),
la pluralité de parties réceptrices (201) étant séparées par au moins une cloison (210), et un espace de séparation étant présent entre l'au moins une cloison (210) et la plaque supérieure (300), et
l'échangeur de chaleur (400) communiquant avec l'espace de séparation.

2. Bloc-batterie selon la revendication 1, l'échangeur de chaleur (400) communiquant avec la pluralité de parties réceptrices (201) par le biais d'un conduit (310) formé par une plaque supérieure (300) couvrant la pluralité de parties réceptrices (201).

3. Bloc-batterie selon la revendication 1, l'échangeur de chaleur (400) étant une plaque de refroidissement formée entre une plaque supérieure (300) couvrant la pluralité de parties réceptrices (201) et la pluralité de parties réceptrices (201).

4. Dispositif comprenant le bloc-batterie selon la revendication 1.
